# NEUE EUROPÄISCHE PATENTSCHRIFT

(11) **EP 0 623 527 B2**
(45) Veröffentlichungstag und Bekanntmachung des Hinweises auf die Entscheidung über den Einspruch: **02.05.2002**
(45) Hinweis auf die Patenterteilung: 16.07.1997
(21) Anmeldenummer: 94106665.6
(22) Anmeldetag: 28.04.1994
(51) Int. Cl.: B65D 88/28, F16K 31/46

(54) **Schüttgutbehälter mit Bodenauslaufventil**
Bulk material container with bottom discharging valve
Récipient pour matériaux en vrac équipé d'une vanne d'évacuation par le fond

(30) Priorität: 05.05.1993 DE 4314794
(43) Veröffentlichungstag der Anmeldung: 09.11.1994
(73) Patentinhaber: L.B. Bohle Maschinen + Verfahren GmbH, 59320 Ennigerloh (DE)
(72) Erfinder: Müller, Josef, D-60529 Frankfurt (DE)
(74) Vertreter: Habbel, Ludwig (Lutz), Dipl.-Ing.

(56) Entgegenhaltungen:
- FR-A- 999 118
- US-A- 2 241 316
- US-A- 4 560 283
- SOVIET INVENTIONS ILLUSTRATED Section PQ, Week K12, 4. Mai 1983 Derwent Publications Ltd., London, GB; Class Q34, AN D9706 & SU-A-927 648 (DON FERROUS METAL) 15. Mai 1982
- SOVIET INVENTIONS ILLUSTRATED Section PQ, Week D39, 4. November 1981 Derwent Publications Ltd., London, GB; Class Q34, AN K0920 & SU-A-793 881 (TITANIUM RES DES) 7. Januar 1981
- PATENT ABSTRACTS OF JAPAN vol. 7, no. 69 (C-158) 23. März 1983 & JP-A-58 006 910 (MINAMI SHIYOUZOU) 14. Januar 1983
- Prospekt "Pneumatische Förderanlagen - Abscheider Typ PK für schlecht rieselfähige Schüttgüter" der AZO GmbH & Co.

## Beschreibung

Zum Verpacken von Tabletten, Kapseln, Dragees und ähnlichem, nachfolgend "Schüttgut" genannt, wird das Schüttgut einem Schüttgutbehälter über ein Bodenauslaufventil entnommen und einer entsprechenden Verpackungsmaschine zugeführt. Handelt es sich bei dem Schüttgut um ein Arznei- oder Lebensmittel, muß das Bodenauslaufventil eine Reihe von Forderungen erfüllen:
- Das Schüttgut darf beim Öffnen und Schließen des Ventils nicht beschädigt oder zerbrochen werden, da Bruchstücke in der Verpackungsmaschine zu Problemen führen,
- alle Bauteile des Ventils müssen leicht zu demontieren und leicht zu reinigen sein,
- das Ventil darf keine Bereiche aufweisen, in denen Schüttgut unbemerkt verbleiben kann,
- der Schüttgutbehälter und das Ventil müssen sich ohne Zuhilfenahme weiterer Hilfsmittel selbsttätig völlig entleeren,
- in dem Absperrventil darf es beim Durchfluß des Schüttgutstromes zu keinen Schüttgutansammlungen kommen, die den Schüttgutauslauf behindern oder zum Stillstand bringen.

Die bekannten Schüttgutbehälter sind mit Absperrklappen versehen. Die Lösung ist nicht zufriedenstellend, da beim betätigen der Absperrklappen Schüttgut zerbrochen wird und sich die Klappen oft nicht schließen lassen.

In einem Prospekt "Pneumatische Förderanlagen - Abscheider Typ PK ... für schlecht rieselfähige Schüttgüter" der AZO GmbH & Co. (Osterburken, Deutschland) mit Druckvermerk 223 9050d (D1) werden Einbaumaße von Abscheidern der Typen PK320 und PK500 genannt, jedoch nicht das eigentliche Konstruktionsprinzip des Abscheiders. Es wird lediglich darauf hingewiesen, daß der Auslauf ein *"druckluftbetätigter Kegelverschluß"* bzw. *"pneumatisch betätigter Kegelverschluß"* für *"schlecht rieselfähige Schüttgüter"* sei. In der Zeichnung 20996-01-06.2 vom 21.10.1991/19.03.1992 zum Abscheider PK320 V-50 der AZO GmbH & Co. (D2), die den Vermerk trägt: *"Diese Zeichnung darf ohne unsere Genehmigung weder dritten Personen noch Konkurrenz-Firmen mitgeteilt werden. Sie ist auf Verlangen jederzeit zurückzugeben",* ist ein Abscheider dargestellt, der kein Leitrohr und keinen gewölbten Ventilteller hat. Der Ventilteller wird durch eine pneumatische oder hydraulische Einrichtung betätigt. In dem Auszug aus der Lieferdatei der Abscheider der AZO GmbH & Co.(D3) wird angegeben, an welche Kunden - wann - welcher Abscheider der Typen PK 320 und PS 235 geliefert wurde.

Es ist ferner bekannt, Schüttgutbehälter mit einem weichem Gummi- oder Kunststoffschlauch als Absperrorgan zu versehen, durch den das Schüttgut ausläuft. Zum Absperren wird das freie Ende des Schlauches mittels einer Mechanik solange gegen das feste Ende verdreht, bis der Schlauch verschlossen ist. Die hierzu benötigte Mechanik ist aufwendig. Diese Absperrvorrichtung läßt sich zum Reinigen schlecht zerlegen und in den Falten des zusammengedrehten weichen Schlauches kann Schüttgut unbemerkt zurückbleiben.

Hier will die Erfindung Abhilfe schaffen. Die Aufgabe wird durch einen Schüttgutbehälter mit Bodenauslaufventil gelöst, bei dem in einem Leitrohr, das am Bodenauslauf des Behälters befestigt ist, ein Ventilsitz mit konisch gestalteter Zulaufseite angeordnet ist, auf dem ablaufseitig ein gewölbter Ventilteller gelagert ist, der bei geschlossener Ventilstellung sich mit seiner Wölbung auf der Öffnung des Ventilsitzes abstützt, und der auf seiner hohlen Seite einen Führungsbolzen aufweist, der in einer im Leitrohr angeordneten Führungshülse gleitend gelagert und mit einer Betätigungseinrichtung mit mechanischem Antrieb verbunden ist.

Der Ventilsitz kann elastisch ausgestaltet sein und eine Dichtlippe aufweisen, auf der sich ablaufseitig der Ventilteller abstützt. Die Betätigungseinrichtung hat einen mechanischen Antrieb, der aus einem Bowdenzug mit Betätigungszug und Hebelsystem besteht.

Der Vorteil des erfindungsgemäßen Schüttgutbehälters ist im wesentlichen darin zu sehen, daß sein Bodenauslaufventil aus wenigen Bauteilen besteht, die leicht zu reinigen sind und einfach demontiert werden können. Er kann überall dort eingesetzt werden, wo der Auslauf von empfindlichen Schüttgütern aus Behältern abgesperrt bzw. freigegeben werden soll. Die weiche Dichtlippe des Ventils verhindert, daß die empfindlichen Schüttgüter zerbrochen werden, falls sie beim Schließen des Ventils zwischen Ventilteller und Ventilsitz eingeklemmt werden sollten. Der Schüttgutbehälter hat keine toten Bereiche in dem Schüttgut unbemerkt zurückbleiben kann. Auch Staubablagerungen sind durch den einfachen Aufbau des Ventils auf ein sehr kleines Maß beschränkt. Das Ventil kann durch einen Handhebelmechanismus betätigt werden, wie es im folgenden dargestellt ist.

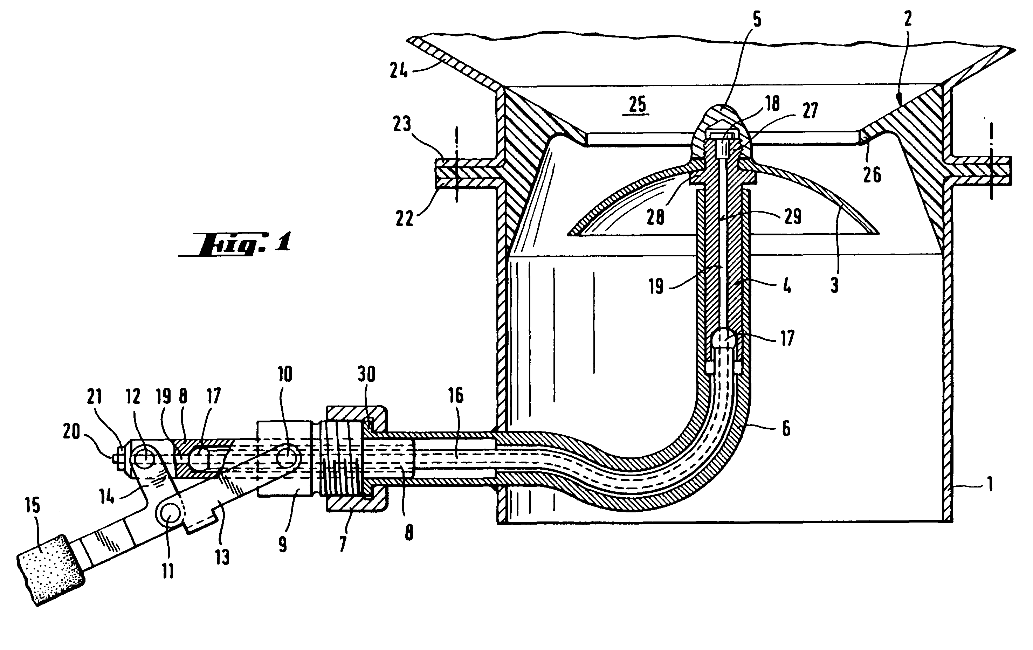

Im folgenden wird die Erfindung anhand von lediglich einen Ausführungsweg darstellenden Zeichnungen näher erläutert. Es zeigt
- Figur 1: den Bodenteil des Schüttgutbehälters mit geöffnetem Bodenauslaufventil geschnitten und
- Figur 2: das geschlossene Bodenauslaufventil geschnitten.

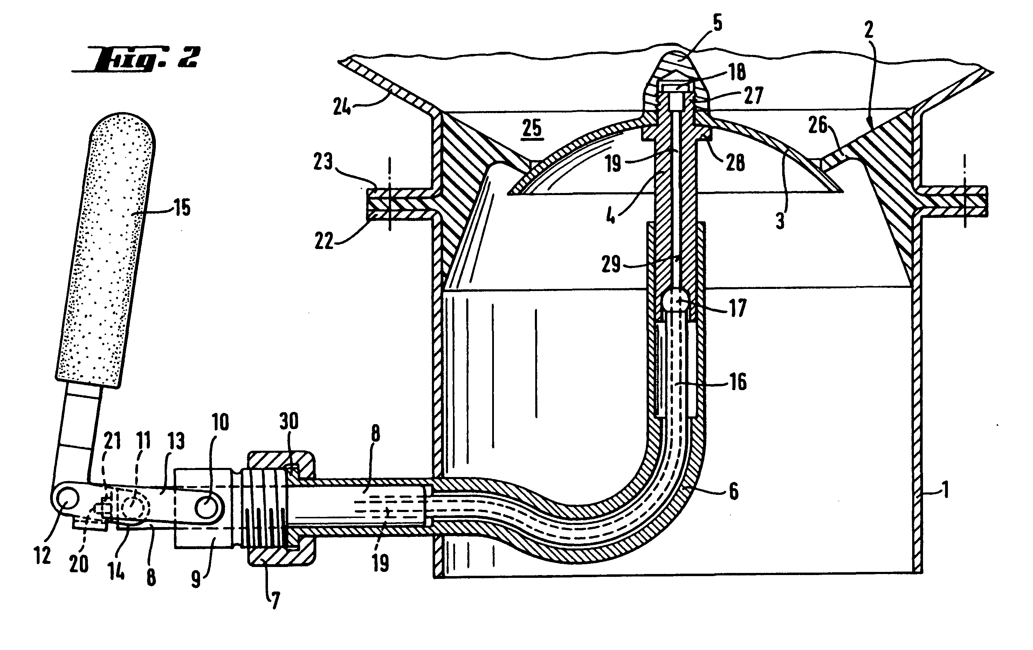

Das Bodenauslaufventil besteht aus einem Leitrohr 1, das beidseitig offen ist und beispielsweise mittels Flansch 22 am Flansch 23 des Bodenauslaufs des Schüttgutbehälters 24 befestigt ist. Im Leitrohr 1 ist der Ventilsitz 2 angeordnet. Er ist auf der Zulaufseite 25 konisch gestaltet, wodurch er Leitfunktion für das Schüttgut übernimmt. Er kann eine elastische Dichtlippe 26 aufweisen, auf der sich ablaufseitig ein gewölbter Ventilteller 3 abstützt, der bei geschlossenem Ventil mit seiner Wölbung In die Öffnung des Ventilsitzes 2 ragt (Figur 2). Auf der hohlen Seite des Ventiltellers 3 ist ein Führungsbolzen 4 angeordnet, der den Ventilteller durchdringen kann und der in einer im Zentrum (mittig) des Leitrohrs 1 angeordneten Führungshülse 6 gleitend gelagert ist. Der Führungsbolzen 4 ist mit einer Betätigungseinrichtung verbunden. Die Betätigungseinrichtung besteht aus einem mechanischen Antrieb. Im folgenden wird der mechanische Antrieb näher erläutert.

Der Ventilteller 3 weist ein zentrisches Loch auf, welches von einem Gewindezapfen 27 des Führungsbolzens 4 durchdrungen wird. Unterhalb dieses Gewindezapfens 27 besitzt der Führungsbolzen 4 eine ringförmige Schulter 28, auf der der Ventilteller 3 aufliegt. Mittels einer Hutmutter 5 wird der Ventilteller 3 gegen die ringförmige Schulter 28 des Führungsbolzens 4 geklemmt. Die Hutmutter 5 hat außen die Form eines Kegels mit stark verrundeter Spitze. Der Führungsbolzen 4 hat eine in axialer Richtung durchgehende Bohrung 29, die sich an den Bolzenenden stufenförmig auf einen größeren Durchmesser erweitert. In dieser Bohrung sitzt am oberen Ende ein Nippel 18 eines Betätigungszuges 19. Unterhalb des Ventiltellers 3, ebenfalls zentrisch zur Öffnung des Ventilsitzes 2, steht der senkrechte Teil der Führungshülse 6 mittig und koaxial mit der Achse des Leitrohres 1. In diesen senkrechten Teil der Führungshülse 6 ist der Führungsbolzen 4 von oben eingesteckt. Bei der Auf-oder Abwärtsbewegung des Ventiltellers wird der Führungsbolzen 4 in der Führungshülse 6 geführt. Der senkrechte Teil der Führungshülse 6 geht im unteren Bereich des Leitrohres 1 In einen 90°-Bogen über, so daß die weitere Fortsetzung der Führungshülse waagrecht verläuft und die Wandung des Leitrohres 1 nach außen durchdringt. Außerhalb des Leitrohres 1 endet sie mit einem freien Ende, das eine Überwurfmutter 7 und einen ringförmig umlaufenden Bund 30 trägt. Gegen diesen Bund 30 wird mittels Überwurfmutter 7 ein Führungsteil 9 gepreßt, das eine Schubstange 8 führt, die in die Führungshülse 6 ragt. Die Schubstange 8 ist durch eine flexible Biegewelle 16 mit dem Führungsbolzen 4 verbunden, die in der Führungshülse 6 hin und her bewegt werden kann. Auf die beiden Enden der Biegewelle 16 ist jeweils eine Kugel 17 aufgesetzt und befestigt. Die Kugeln 17 sind in Fortsetzung der hohlen Biegewelle ebenfalls durchbohrt. Die Biegewelle 16 ist in die Führungshülse 6 eingesteckt und endet im Führungsbolzen 4 einerseits und in der Schubstange 8 andererseits. In dem Gewindezapfen 27 des Führungsbolzens 4 ist der Nippel 18 eingesetzt. Dieser ist mit dem Betätigungszug 19 fest verbunden. Der Betätigungszug 19 ist zunächst durch die Bohrung der einen Kugel 17 gesteckt, durch die hohle Biegewelle 16 hindurchgeführt, wiederum durch die andere Kugel 17 gesteckt und schließlich durch die Schubstange 8. Am Ende, das aus der Schubstange 8 herausragt, ist der Betätigungszug 19 mit einem Gewindestift 20 versehen, auf den eine Mutter 21 aufgeschraubt und gegen das Ende der Schubstange 8 gezogen werden kann. Zum Betätigen der Schubstange 8 ist diese mittels Winkelhebel 14 mit Handschutz 15 und Schwinge 13 mit dem Führungsteil 9 verbunden. 10, 11 und 12 deuten die Drehachsen des Hebelsystems an. Mit dem Hebelsystem kann der Ventilteller 3 sowohl gegen den Ventilsitz 2 als auch von diesem wegbewegt werden, wobei er die Öffnung des Ventilsitzes 2 freigibt. Bei konischem Auslaufteil des Schüttgutbehälters 24 ist es zweckmäßig, für den Ventilsitz 2 die gleiche Konusneigung zu wählen und den Ventilsitz **2** so im Leitrohr **1** anzuordnen, daß das konische Auslaufteil des Schüttgutbehälters in den Ventilsitz 2 ohne Sprung und Neigungsänderung übergeht.

## Patentansprüche

1. Schüttgutbehälter mit Bodenauslaufventil, **dadurch gekennzeichnet, daß** in einem Leitrohr (1), das am Bodenauslauf des Behälters (24) befestigt ist, ein Ventilsitz (2) mit konisch gestalteter Zulaufseite (25) angeordnet ist, auf dem ablaufseitig ein gewölbter Ventilteller (3) gelagert ist, der bei geschlossener Ventilstellung sich mit seiner Wölbung auf der Öffnung des Ventilsitzes (2) abstützt und der auf seiner hohlen Seite einen Führungsbolzen (4) aufweist, der in einer im Leitrohr (1) angeordneten Führungshülse (6) gleitend gelagert und mit einer Betätigungseinrichtung mit mechanischem Antrieb verbunden ist.

2. Schüttgutbehälter nach Anspruch 1, **dadurch gekennzeichnet, daß** der Ventilsitz (2) elastisch ausgestaltet ist und eine Dichtlippe (26) aufweist, auf der sich ablaufseitig der Ventilteller (3) abstützt.

3. Schüttgutbehälter nach Anspruch 1, **dadurch gekennzeichnet, daß** die Betätigungseinrichtung aus einem Bowdenzug (16) mit Betätigungszug (19) und Hebelsystem (13,14) besteht.

## Claims

1. A bulk material container having a bottom outlet valve, wherein, in a conductor tube (1), which is attached at the bottom outlet of the container (24), there is arranged a valve seat (2) having a conically shaped feed side (25) on which is mounted on the outlet side a dished valve disk (3) which, in the closed valve position, is supported by its dishing on the opening of the valve seat (2) and which has on its hollow side a guide pin (4) which is mounted to be able to slide in a guide sleeve (6) arranged in the conductor tube (1) and which is connected to an actuating device, which has a mechanical drive.

2. The bulk material container as claimed in claim 1, wherein the valve seat (2) is designed to be elastic and has a sealing lip (26), on which the valve disk (3) is supported on the outlet side.

3. The bulk material container as claimed in claim 1, wherein the actuating device consists of a flexible shaft (16) and lever system (13, 14).

## Revendications

1. Récipient pour produit en vrac comportant une vanne d'évacuation par le fond, **caractérisé en ce que** dans un tube de guidage (1), qui est fixé à la sortie de fond du récipient (24), est disposé un siège de vanne (2) possédant un côté arrivée de forme conique (25) et sur lequel est monté, côté sortie, un disque de vanne cintré (3), qui, lorsque la vanne est en position fermée, prend appui par sa partie cintrée sur l'ouverture du siège de vanne (2) et qui possède, sur son côté creux, un goujon de guidage (4), qui est monté de manière à glisser dans une douille de guidage (6) disposée dans le tube de guidage (1), et est relié à un dispositif d'actionnement, qui comporte un dispositif d'entraînement mécanique.

2. Récipient pour produit en vrac selon la revendication 1, **caractérisé en ce que** le siège de vane (2) est agencé de manière à être èlastique et comporte une lèvre d'étanchéité (26), sur laquelle le disque de vanne (3) prend appui côté évacuation.

3. Récipient pour produit en vrac selon la revendication 1, **caractérisé en ce que** le dispositif d'actionnement est constitué par un arbre flexible (16) et un système à levier (13, 14).
